Europäisches Patentamt

European Patent Office

Office européen des brevets

(19)

(11) Numéro de publication: 0 049 663
A1

# (12) DEMANDE DE BREVET EUROPEEN

(21) Numéro de dépôt: 81401530.1

(22) Date de dépôt: 02.10.81

(51) Int. Cl.³: C 04 B 31/40
C 04 B 31/12

(30) Priorité. 03.10.80 FR 8021269

(43) Date de publication de la demande:
14.04.82 Bulletin 82/15

(84) Etats contractants désignés:
AT BE CH DE GB IT LI LU NL SE

(71) Demandeur: Etablissement public dit:
CHARBONNAGES DE FRANCE
9, Avenue Percier
F-75008 Paris(FR)

(72) Inventeur: Guillon, Pierre
4, rue Richer
F-75009 Paris(FR)

(72) Inventeur: Maugy, Robert
38 Avenue de Chantilly .
F-60300 Senlis(FR)

(74) Mandataire: Rinuy, Guy et al,
14, Avenue de la Grande Armée
F-75017 Paris(FR)

(54) Granulats légers à base de matières silico-alumineuses et leur procédé d'obtention.

(57) L'invention concerne des granulats légers à base de matières silico-alumineuses telles que schistes, argiles, cendres volantes de centrales thermiques et analogues, caractérisés en ce qui'ils présentent, en combinaison, les caractéristiques suivantes:

- une densité en vrac nettement inférieure à 450 kg/m³ avantageusement comprise entre 150 et 300 kg/m³;

- des alvéoles de diamètre inférieur à 3 mm et en majeure partie inférieur ou égal à 1 mm, uniformément répartis dans l'ensemble du granulat.

- un coefficient d'absorption d'eau inférieur à 5 % en poids.

EP 0 049 663 A1

Croydon Printing Company Ltd

1

<u>Granulats légers à base de matières silico-alumineuses
et leur procédé d'obtention.</u>

La présente invention concerne de nouveaux granulats légers obtenus à partir de matières silico-alumineuses telles que schistes, argiles, cendres volantes de centrales thermiques etc., ainsi qu'un procédé d'obtention de ces granulats.

On sait déjà fabriquer des granulats légers, destinés notamment à être incorporés aux bétons, à partir de matières silico-alumineuses telles que schistes houillers ou cendres de centrales thermiques. Par exemple, le brevet français N° 1 527 088 décrit un procédé suivant lequel des schistes houillers sont broyés, puis additionnés d'eau et mis sous forme de nodules, après quoi lesdits nodules sont enflammés et oxydés à 900°C, puis soumis à une expansion par chauffage à une température comprise entre 1280 et 1400°C. Dans ce procédé, la phase d'oxydation permet de réduire la teneur en carbone à une valeur qui est de l'ordre de 0,8 % et l'expansion est essentiellement due à la réaction de ce carbone résiduel sur l'oxyde ferreux présent dans les granules. Le brevet français N° 2 179 583 propose d'améliorer la qualité des granules en réduisant la teneur en carbone résiduel à une valeur comprise entre 0,3 et 0,5 % et de préférence voisine de 0,5 % et en effectuant la décarbonation à une température de l'ordre de 1030°C.

Les granulats obtenus par les procédés décrits dans les brevets français N° 1 527 088 et 2 179 583 ont des densités en vrac comprises entre 450 kg/m$^3$ et 1000 kg/m$^3$. Si on veut obtenir des produits de densité moins élevée, par exemple en augmentant la teneur en carbone résiduel ou en ajoutant des substances porogènes, on obtient des granulats hétérogènes et peu solides, qui comportent des alvéoles de grande dimension et ont tendance à éclater au moment de l'expansion.

2

Le brevet français N° 1 485 697 propose un procédé susceptible de conduire à des granulats de densité moins élevée que ceux décrits dans les brevets français N° 1 527 088 et N° 2 179 583. Toutefois, en pratique, les produits obtenus en mettant en oeuvre le mode opératoire décrit dans ce brevet ont également des densités en vrac supérieures à 450 kg/m$^3$.

On a déjà décrit, par exemple dans le brevet français 2 391 169, des granulats expansés de faible densité obtenus à partir de verres, c'est-à-dire à partir de matières essentiellement composées de silice et de constituants alcalins ou alcalino-terreux. Toutefois, les procédés mis en oeuvre pour l'obtention de ces verres expansés ne peuvent pas être utilisés pour l'expansion de matières silico-alumineuses qui sont caractérisées par une teneur en alumine nettement supérieure, généralement comprise entre 15 et 35 %, et dont le point de fusion est beaucoup plus élevé.

On sait aussi, d'après le brevet U.S. 4 226 819, préparer des granulats expansés dont la densité est inférieure à 450 kg/m$^3$. Toutefois, ces granulats ont des coefficients d'absorption d'eau élevés compris entre 16 et 32 %. Par ailleurs, ces granulats sont obtenus à partir de matières premières dont la teneur totale en oxydes de fer est inférieure à 10 %.

La présente invention vise donc à obtenir à partir de matières silico-alumineuses des granulats de densité en vrac nettement inférieure à 450 kg/m$^3$ avec un faible coefficient d'absorption d'eau et des alvéoles de petite dimension uniformément répartis dans l'ensemble du granulat.

La présente invention vise donc à obtenir des granulats de densité en vrac nettement inférieure à 450 kg/m$^3$ avec des alvéoles de petite dimension uniformément répartis dans l'ensemble du granulat.

Les granules selon l'invention, obtenus à partir de matières silico-alumineuses telles que schistes, argiles ou cendres, sont caractérisés par :

- une densité en vrac comprise entre 150 et 300 kg/m$^3$.

- des alvéoles de diamètre inférieur à 3 mm et en majeure partie inférieur ou égal à 1 mm, uniformément répartis dans l'ensemble du granulat.

- un coefficient d'absorption d'eau inférieur à 5 % en poids.

Le coefficient d'absorption d'eau peu élevé correspond à une structure fermée des alvéoles (isolés les uns des autres) et à une bonne vitrification de l'enveloppe externe du granulat qui ont pour effet d'isoler les alvéoles du milieu extérieur. Cette bonne vitrification de l'enveloppe des granulats jointe aux dimensions faibles des alvéoles procure en outre aux granulats des caractéristiques mécaniques satisfaisantes (bonne résistance à l'écrasement).

Les granulats selon l'invention sont notamment fabriqués à partir de matières silico-alumineuses telles que schistes, argiles ou cendres par un procédé consistant à expanser par chauffage à une température supérieure à 1100°C des granulés ayant une teneur en carbone organique comprise entre 0,1 et 0,2 % et une teneur en oxyde ferreux supérieure à 10 %.

Suivant un mode de réalisation avantageux :

dans le cas où la matière première de départ contient du carbone organique en quantité insuffisante, on amène la teneur en carbone à la valeur appropriée par addition de carbone ou d'une substance ou d'une matière première contenant du carbone.

- dans le cas où la matière première contient plus de 0,2 % de carbone, on fait subir aux granules un traitement permettant de réduire leur teneur en carbone. Dans le cas où cette teneur est relativement faible, le préchauffage des granules ou un chauffage en atmosphère neutre peut suffire à abaisser la teneur en carbone à moins de 0,2 % environ. Par contre, si la matière première est relativement riche en carbone, par exemple dans le cas des schistes houillers, on soumet de préférence les granules à une oxydation par un gaz contenant de l'oxygène. Ce dernier traitement s'effectue avantageusement à une température comprise entre 900 et 950°C environ. Dans ces conditions, on constate que la teneur en carbone descend rapidement (en 30 à 60 minutes environ) à une valeur comprise entre 0,1 et 0,2 % puis n'évolue plus que lentement. Le temps de séjour dans l'enceinte d'oxydation n'est donc pas critique.

- la teneur en oxyde ferreux supérieure à 10 % environ est obtenue en soumettant les granules avant expansion, à une réduction en présence d'un gaz réducteur. Si la matière première ne contient pas suffisamment d'oxydes de fer pour, qu'après réduction, cette teneur de 10 % soit atteinte, il est nécessaire de lui en ajouter. L'addition d'oxydes de fer a en outre pour effet d'abaisser la température d'expansion en augmentant la plasticité du matériau à la température correspondante.

La phase de réduction est avantageusement effectuée en portant le granulat à une température supérieure à 800°C en présence d'un gaz contenant un ou plusieurs constituants réducteurs tels que hydrogène, méthane, oxyde de carbone, etc. On préfère en général effectuer la réduction à une température sensiblement voisine de celle de l'oxydation, c'est-à-dire vers 900-950°C.

La phase d'expansion est effectuée par chauffage à une température supérieure à 1100°C, de préférence voisine de 1200°C. La température d'expansion dépend de la nature de la matière première utilisée et notamment des additifs qui y ont éventuellement été incorporés (oxydes de fer ou autres additifs connus pour agir sur la température d'expansion).

Les exemples suivants sont donnés à titre illustratif et nullement limitatif de l'invention.

EXEMPLE 1

Un échantillon de schiste houiller contenant 6 % de carbone est broyé à 500 µm, additionné de 10 % d'hématite, puis aggloméré à l'extrudeuse sous forme de granules cylindriques de 11 mm de diamètre et 10 mm de longueur. Les granules sont séchés et préchauffés à 700°C, puis portés rapidement dans un four à 925°C en présence d'air, où ils sont maintenus pendant une heure. Puis les granules sont traités à 925°C par un gaz contenant 1 % d'hydrogène pendant 45 minutes. Les granules obtenus (qui contiennent environ 0,15 % de carbone) sont alors expansés par chauffage à 1200°C pendant 2 à 3 minutes.

On obtient des granules de densité apparente 0,25 soit une densité en vrac voisine de 180 kg/m$^3$ ayant un coefficient d'absorption d'eau inférieur à 1 % et dont la structure comporte des alvéoles uniformément répartis ayant une dimension inférieure à 2 mm et en moyenne voisine de 1 mm ou moins.

EXEMPLE 2

Un échantillon d'ardoise contenant 0,4 % de carbone est broyé à 500 µm, additionné de 10 % d'hématite, puis aggloméré à l'extrudeuse sous forme de granules comme dans l'exemple 1. Les granules sont séchés et préchauffés à 930°C, pendant 30 minutes en atmosphère neutre, leur teneur en carbone étant, après ce traitement, de l'ordre de 0,2 %. Ils sont alors réduits dans un four à 800°C en présence d'une atmosphère réductrice à 11 % d'hydrogène pendant 10 minutes environ, puis expansés par chauffage entre 1150 et 1220°C pendant 2 à 3 minutes. On botient ainsi des granulats de densité apparente 0,222 (soit une densité en vrac de 155 kg/m$^3$) ayant un coefficient d'absorption d'eau de 1,4 % et présentant des alvéoles uniformément répartis de dimension inférieure à 2 mm et en moyenne égale ou inférieure à 1 mm.

Il va de soi que la présente invention n'a été décrite qu'à titre purement explicatif et nullement limitatif et que toute modification utile pourra y être apportée sans sortir de son cadre tel que défini par les revendications ci-après.

## REVENDICATIONS

1. Granulats légers à base de matières silico-alumineuses telles que schistes, argiles, cendres volantes de centrales thermiques et analogues, caractérisés en ce qu'il présentent, en combinaison, les caractéristiques suivantes :

- une densité en vrac nettement inférieure à 450 kg/m$^3$ avantageusement comprise entre 150 et 300 kg/m$^3$ ;

- des alvéoles de diamètre inférieur à 3 mm et en majeure partie inférieur ou égal à 1 mm, uniformément répartis dans l'ensemble du granulat.

- un coefficient d'absorption d'eau inférieur à 5 % en poids.

2. Procédé d'obtention des granulats, selon la revenndication 1, caractérisé en ce qu'il consiste à expanser par chauffage à une température supérieure à 1100°C des granules ayant une teneur en carbone organique comprise entre 0,1 et 0,2 % et une teneur en oxyde ferreux supérieure à 10 %.

3. Procédé selon la revendication 2, caractérisé en ce que dans le cas où la matière première de départ contient du carbone organique en quantité insuffisante, on amène la teneur en carbone à la valeur appropriée par addition de carbone ou d'une substance ou d'une matière première contenant du carbone.

4. Procédé selon la revendication 2, caractérisé en ce que dans le cas où la matière première contient plus de 0,2 % de carbone, on soumet celle-ci à un simple chauffage en atmosphère neutre ou en atmosphère oxydante.

5. Procédé selon la revendication 4, carctérisé en ce que le chauffage en atmosphère oxydante s'effectue entre 900 et 950°C.

6. Procédé selon l'une quelconque des revendications 1 à 5, caractérisé en ce que la teneur en oxyde ferreux supérieure à 10 % est obtenue en soumettant les granules, avant expansion, à une réduction en présence d'un gaz réducteur.

Office européen
des brevets

**RAPPORT DE RECHERCHE EUROPEENNE**

| | DOCUMENTS CONSIDERES COMME PERTINENTS | | | CLASSEMENT DE LA DEMANDE (Int. Cl.³) |
|---|---|---|---|---|
| Catégorie | Citation du document avec indication, en cas de besoin, des parties pertinentes | | Revendication concernée | |
| D | FR - A - 1 485 697 (HOULLIERES DU BASIN DU NORD ET DU PAS-DE-CALAIS)<br><br>* Page 2, colonne de gauche, 2ème paragraphe, colonne de droite, revendications 1-10 * | | 1 | C 04 B 31/40<br>31/12 |
| | -- | | | |
| D | FR - A - 1 527 088 (HOULLIERES DU BASIN DU NORD ET DU PAS-DE-CALAIS)<br><br>* Page 1, revendication 1 * | | 1 | |
| | -- | | | |
| D | FR - A - 2 179 583 (HOULLIERES DU BASIN DU NORD ET DU PAS-DE-CALAIS)<br><br>* Revendications 1,8 * | | 1-6 | **DOMAINES TECHNIQUES RECHERCHES (Int. Cl.³)**<br><br>C 04 B |
| | -- | | | |
| DA | FR - A - 2 391 169 (BFG GLASS-GROUP)<br><br>* Revendications 1,3,6,7 * | | 1-6 | |
| | -- | | | |
| | US - A - 4 226 819 (RAFIK B. OGANESIAU)<br><br>* Revendications 1-3; description de l'invention * | | 1-4 | |
| | ---- | | | **CATEGORIE DES DOCUMENTS CITES**<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons<br><br>&: membre de la même famille, document correspondant |

| | Le présent rapport de recherche a été établi pour toutes les revendications | |
|---|---|---|
| Lieu de la recherche<br>La Haye | Date d'achèvement de la recherche<br>18-11-1081 | Examinateur<br>STANGE |

OEB Form 1503.1   06.78